# EUROPÄISCHE PATENTSCHRIFT

(11) **EP 4 306 797 B1**
(45) Veröffentlichungstag und Bekanntmachung des Hinweises auf die Patenterteilung: **30.04.2025**
(21) Anmeldenummer: 22184291.7
(22) Anmeldetag: 12.07.2022
(51) Int. Cl.: F03D 80/40

(54) **WINDENERGIEANLAGEN-ROTORBLATT UND WINDENERGIEANLAGE**
WIND TURBINE BLADE ROTOR BLADE AND WIND TURBINE
PALE DE ROTOR POUR ÉOLIENNES ET ÉOLIENNE

(43) Veröffentlichungstag der Anmeldung: 17.01.2024
(73) Patentinhaber: Wobben Properties GmbH, 26607 Aurich (DE)
(72) Erfinder: Daboul, Hussam, 26624 Südbrookmerland (DE); Mahmoud, Muhanad, 26605 Aurich (DE); Godenau, Diethelm, 39279 Rosian (DE)
(74) Vertreter: Eisenführ Speiser

(56) Entgegenhaltungen:
- EP-A1- 3 048 296
- EP-A1- 3 048 297

## Beschreibung

Die vorliegende Erfindung betrifft ein Windenergieanlagen-Rotorblatt und eine Windenergieanlage.

Da Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes bereitgestellt werden. Dies kann beispielsweise mittels eines Heizregisters erfolgen, das warme Luft erzeugt, welche dann in das Innere des Rotorblattes geblasen wird.

WO 2017/021350 A1 zeigt ein Windenergieanlagen-Rotorblatt mit einem Rotorblattwurzelbereich und einem Rotorblattspitzenbereich sowie einer Rotorblattheizung. Ferner ist mindestens ein Steg entlang einer Längsachse des Rotorblattes vorgesehen. An dem Steg kann eine Umlenkeinheit in Form eines Stegtropfens vorgesehen sein, um eine Verwirbelung der Luft beim Umlenken zu reduzieren.

WO 2018/211055 zeigt ein Windenergieanlagen-Rotorblatt mit einer Rotorblattheizung. Das Rotorblatt weist einen Steg und eine Umlenkeinheit im Bereich der Rotorblattspitze zum Umlenken von erwärmter Luft auf.

EP 3 048 296 A1 zeigt ein Rotorblatt einer Windenergieanlage mit einer Rotorblattheizung.

EP 3 048 297 A1 zeigt ein Rotorblatt einer Windenergieanlage mit einer Rotorblattheizung.

Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einer Rotorblattwurzel, einer Rotorblattspitze, einer Druckseite, einer Saugseite, einer Vorderkante und einer Hinterkante vorgesehen. Das Rotorblatt weist eine Längsrichtung auf. Mittels einer Rotorblattheizung wird warme Luft erzeugt, welche dann in das Innere des Rotorblattes geblasen wird. In der Luftführung innerhalb des Rotorblattes ist mindestens ein passiv steuerbares Luftsteuerungselement vorgesehen. Durch das Luftsteuerungselement wird erreicht, dass die Luftströmung in der Luftführung innerhalb des Rotorblattes beeinflusst oder gesteuert werden kann. Somit kann z.B. erreicht werden, dass sich die Luftmassen mit unterschiedlichen Temperaturen (warme Luft in der Mitte der Luftströmung und kältere Luft zur Rotorblattau-ßenseite) innerhalb des Rotorblattes besser vermischen.

Das passiv steuerbare Luftsteuerungselement weist einen temperaturabhängigen Abschnitt auf, der seine Form temperaturabhängig ändert. Damit reagiert das Luftsteuerungselement automatisch auf eine Änderung der Temperatur, was zu einer Änderung der Luftführung führt. Durch die temperaturabhängige Formveränderung kann die Beeinflussung der Luftströmung zur Effizienzsteigerung erreicht werden. Optional ist mindestens ein Steg zwischen der Druckseite und der Saugseite entlang der Längsrichtung des Rotorblattes vorgesehen. Die von der Rotorblattheizung erwärmte Luft kann entlang des Steges in Richtung der Rotorblattspitze geblasen werden, wo sie umgelenkt wird, so dass die erwärmte Luft auf der anderen Seite des Steges zurück von dem Rotorblattspitzenbereich zu dem Rotorblattwurzelbereich strömen kann. Mindestens ein passiv steuerbares Luftsteuerungselement kann entlang eines Steges zur Beeinflussung der Luftströmung vorgesehen sein. Das passiv steuerbares Luftsteuerungselement weist keine aktiven Steuerelemente, sondern nur passive steuerbare Elemente auf. Es erfolgt damit kein aktives Eingreifen in die Luftsteuerungselemente. Das passiv steuerbare Luftsteuerungselement erlaubt eine temperaturabhängige passive Steuerung. Dazu ermöglicht das Luftsteuerungselement zumindest teilweise eine temperaturabhängige Verformung.

Gemäß einem Aspekt kann das passiv steuerbare Luftsteuerelement einen Bimaterialabschnitt mit einem ersten und einem zweiten Materialabschnitt aufweisen. Das Material des ersten Materialabschnitts weist einen anderen thermischen Ausdehnungskoeffizienten als das Material des zweiten Materialabschnitts auf. Somit kann es bei einer Temperaturänderung dazu kommen, dass sich der erste und zweite Materialabschnitt unterschiedlich ausdehnen und es so zu einer Verformung des Bimaterialabschnittes kommt.

Vorzugsweise ist der Bimaterialabschnitt als ein Bimetallabschnitt mit einem ersten und zweiten Metallabschnitt mit unterschiedlichen Wärmeausdehnungskoeffizienten vorgesehen. Bei zunehmender Temperatur dehnen sich der erste und zweite Metallabschnitt, welche miteinander gekoppelt sind, unterschiedlich aus, so dass es zu einer Verbiegung des Bimetallabschnittes in Richtung des Metallabschnitts mit dem geringeren Ausdehnungskoeffizienten kommt. Diese Formänderung bewirkt eine Beeinflussung der Luftströmung der erwärmten Luft im Inneren des Rotorblattes.

Das passiv steuerbare Luftsteuerungselement kann als ein passiv gesteuerter statischer Mischer ausgestaltet sein. Der Mischer weist einen Bimaterialabschnitt mit einem ersten und zweiten Material auf, welche aneinandergekoppelt sind und unterschiedliche Wärmeausdehnungskoeffizienten aufweisen. Ferner ist an dem Bimaterialabschnitt ein Luftleitelement gekoppelt. Durch die Verformung des Bimaterialabschnittes kommt es beispielsweise zu einer Änderung des Winkels des Luftführungselementes. Somit kann ein Luftstrom in der Luftführung der Rotorblattheizung innerhalb des Rotorblattes beispielsweise durch den passiv gesteuerten statischen Mixer verändert werden. Entsprechend der Temperatur verformt sich der Bimaterialabschnitt und damit verändert sich die Lage der Luftleiteinheit, was wiederum zu einer Änderung der Luftströmung in der Luftströmung führt.

Das passiv gesteuerte Luftsteuerungselement kann als ein passiv gesteuerter Wirbelgenerator ausgestaltet sein. Der Wirbelgenerator kann einen Bimaterialabschnitt mit einem ersten und zweiten Material mit unterschiedlichen Wärmeausdehnungskoeffizienten aufweisen. Bei Erwärmung bzw. Abkühlung des Bimaterialabschnittes kommt es zu einer Verformung des Bimaterialabschnittes. Damit kommt es zu einer Änderung der Form des Wirbelgenerators, wodurch die Luftströmung in der Luftführung der Rotorblattheizung innerhalb des Rotorblattes geändert wird. Somit kann eine passiv gesteuerte Änderung der Luftströmung innerhalb der Luftführung des Rotorblattes erreicht werden.

Das passiv steuerbare Luftsteuerungselement kann ein Element aufweisen, welches eine temperaturabhängige Längenänderung aufweist. Dieses Element kann mit einem Leitblech gekoppelt sein, so dass sich beispielsweise ein Winkel des Leitblechs in Abhängigkeit von der Temperatur ändert. Dadurch kann erreicht werden, dass die Luftströmung innerhalb der Luftführung durch das Leitblech umgelenkt wird, so dass es zu einer Verwirbelung der verschiedenen Temperaturschichten kommen kann. Beispielsweise kann mit zunehmender Temperatur der Winkel des Leitblechs vergrößert werden.

Die passiv steuerbaren Luftströmungselemente können auch bei bestehenden Rotorblättern nachgerüstet werden.

Die passiv gesteuerten Luftsteuerungselemente dienen optional zur lokalen Verbesserung der Rotorblattheizung durch lokale Beeinflussung der Luftströmung der Rotorblattheizung.

Das passiv steuerbare Luftsteuerungselement weist mindestens eine erste und zweite Betriebsposition auf, wobei in der ersten Betriebsposition das Luftsteuerungselement aktiv ist und in der zweiten Betriebsposition nicht aktiv ist. Alternativ dazu kann das Luftsteuerungselement in der ersten Betriebsposition nicht aktiv und in der zweiten Betriebsposition aktiv sein. Der Übergang von der ersten in die zweite Betriebsposition oder von der zweiten in die erste Betriebsposition erfolgt in Abhängigkeit der Temperatur. Insbesondere erfolgt ein Übergang zwischen der ersten und zweiten Betriebsposition aufgrund einer nicht linearen Längenausdehnung eines Bimaterialelementes, welches einen ersten und zweiten Materialabschnitt mit unterschiedlichen Wärmeausdehnungskoeffizienten aufweist.

Die passiv gesteuerten Luftsteuerungselemente können in der Ausgangslage aktiv (Vortex Generatoren VG, statischer Mischer, Klappe (auf)) und in Endlage inaktiv (Vortex Generator VG inaktiv, statischer Mischer inaktiv, Klappe (zu)) sein oder umgekehrt. Dies kann mit gezielter Positionierung bzw. Vorspannung durch das Bimaterialelement erreicht werden.

Das passiv steuerbare Luftsteuerungselement kann an einer Innenwandung des Rotorblattes oder an einem Steg innerhalb des Rotorblattes angeordnet sein. Alternativ dazu kann das passiv steuerbare Luftsteuerungselement auch an anderen Bauteilen im Inneren des Rotorblattes befestigt sein. Insbesondere kann hierbei ein Ende des passiven Luftsteuerungselementes an dem Steg oder der Innenwandung befestigt sein, so dass das andere Ende in das Innenvolumen des Rotorblattes hineinragt und sich temperaturabhängig verformt.

Das passiv steuerbare Luftsteuerungselement mit der temperaturabhängigen Verformung kann als Wirbelgenerator, statischer Mischer und/oder Umlenkschaufel ausgestaltet sein.

Durch die temperaturabhängige Veränderbarkeit (beispielsweise durch Verwendung von zwei Bimaterialelementen) kann ein passiv steuerbares Luftsteuerungselement vorgesehen sein, welches nur dann in die Luftströmung eingreift, wenn dies benötigt wird. Dies ist vorteilhaft, da die passiv steuerbaren Luftsteuerungselemente nur dann in die Luftströmung eingreifen, wenn dies tatsächlich benötigt wird. Somit kann beispielsweise ein dauerhafter Druckverlust aufgrund des Eingriffs der passiv steuerbaren Luftsteuerungselemente in die Luftströmung der Rotorblattheizung vermieden werden.

Insbesondere wenn die passiv steuerbaren Luftsteuerungselemente in ihrer normalen Betriebsart keine Veränderung der Luftströmung der Rotorblattheizung bewirken, führt dies im Normalzustand auch nicht zu einer Beeinträchtigung der Luftströmung.

Durch die entlang des Rotorblattes platzierten passiv steuerbaren Luftsteuerungselemente kann eine lokale Beeinflussung der Luftströmung der Rotorblattheizung erreicht werden. Somit können bestimmte Abschnitte des Rotorblattes aufgrund der passiv steuerbaren Luftströmungselemente verbessert lokal erwärmt werden, um einen Eisansatz zu verhindern oder zu reduzieren.

Somit kann es möglich werden, dass nicht alle Bereiche des Rotorblattes beheizt werden, sondern dass eine lokale Änderung der Temperaturverteilung erreicht werden kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische abschnittsweise Darstellung des Rotorblattes der Windenergieanlage von Fig. 1 gemäß einem ersten Ausführungsbeispiel,
- Fig. 3: zeigt eine schematische Schnittansicht eines Rotorblattes einer Windenergieanlage von Fig. 1 gemäß einem zweiten Ausführungsbeispiel,
- Fig. 4: zeigt eine schematische Darstellung eines passiv steuerbaren Luftsteuerungselementes,
- Fig. 5: zeigt eine schematische Darstellung eines passiv steuerbaren Luftsteuerungselementes,
- Fig. 6: zeigt eine schematische Darstellung eines passiv steuerbaren Luftsteuerungselementes, und
- Fig. 7: zeigt eine schematische Darstellung eines passiv steuerbaren Luftsteuerungselementes.

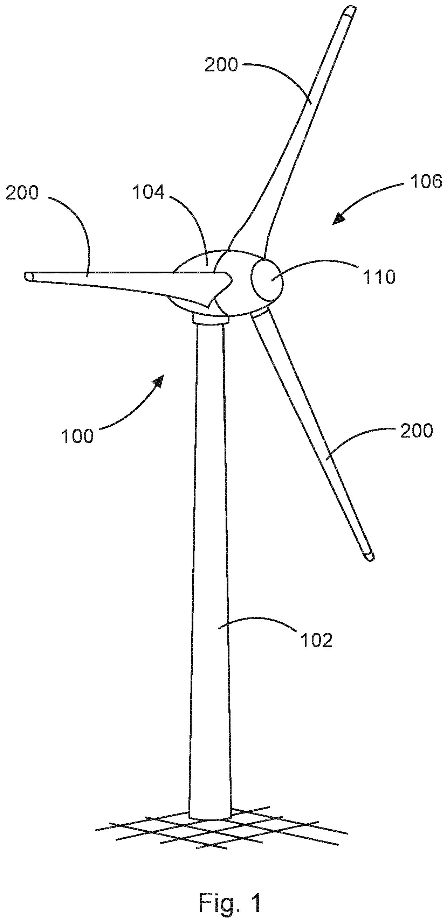

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel angeordnet und erzeugt elektrische Energie. Die Pitchwinkel der Rotorblätter 200 können durch Pitchmotoren an den Rotorblattwurzeln 210 der jeweiligen Rotorblätter 200 verändert werden.

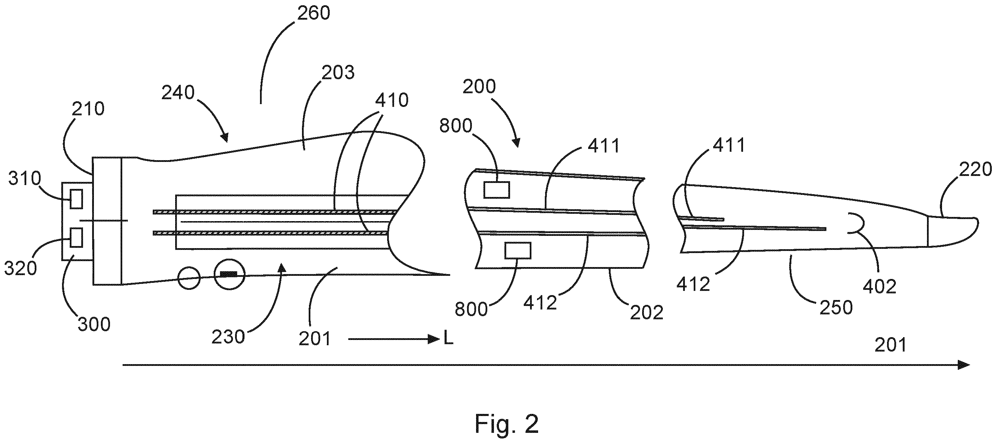

Fig. 2 zeigt eine schematische abschnittsweise Darstellung des Rotorblattes der Windenergieanlage von Fig. 1 gemäß einem ersten Ausführungsbeispiel. Das Rotorblatt 200 weist eine Länge 201, eine Rotorblattwandung 202, ein Innenvolumen 203, eine Rotorblattwurzel 210, eine Rotorblattspitze 220, eine Vorderkante 230, eine Hinterkante 240, eine Druckseite 250 und eine Saugseite 260 auf. Innerhalb des Rotorblattes 200 ist eine Luftführung 400 vorgesehen, welche beispielsweise als ein Steg 410 ausgestaltet sein kann. Eine Rotorblattheizung 300 kann im Bereich der Rotorblattwurzel 210 vorgesehen sein. Die Rotorblattheizung 300 kann einen Lüfter 320 und eine Heizeinheit 310 aufweisen und warme Luft erzeugen, die in das Innere des Rotorblattes 200, d. h. das Innenvolumen 203, geleitet werden kann.

Entlang einer Längsrichtung L des Rotorblattes 200 erstreckt sich innerhalb des Rotorblattes mindestens ein Steg 410, 411, 412, der Teil der Luftführung 400 ist bzw. der aus anderen Gründen bereits vorhanden ist und die Luftführung 400 lediglich eine sekundäre Funktion darstellt. Optional kann mehr als ein Steg vorgesehen sein.

Die durch die Rotorblattheizung 300 erwärmte Luft kann entlang des Steges 411 - als Teil der Luftführung 400 - in Richtung der Rotorblattspitze 220 geführt und dann im Bereich der Rotorblattspitze 220 umgelenkt werden. Dazu kann ein Umlenkabschnitt 402 im Bereich der Rotorblattspitze 220 vorhanden sein. Optional kann die Rotorblattspitze 220 zumindest teilweise hohl ausgestaltet sein, so dass ein Teil der erwärmten Luft durch die Rotorblattspitze 220 strömen kann, um auch die Rotorblattspitze 220 zu enteisen.

Die erwärmte Luft kann mittels der Rotorblattheizung 300 entweder im Rotorblattwurzelbereich erzeugt werden, indem die Luft mittels einer Heizeinheit 310 erwärmt wird, oder die erwärmte Luft wird dem Rotorblatt 200 im Bereich der Rotorblattwurzel 210 zugeführt.

Mindestens ein passiv steuerbares Luftsteuerungselement 800 kann entlang der Länge L des Rotorblattes 200 in der Luftführung 400 vorgesehen sein. Das passiv steuerbare Luftsteuerungselement 800 dient dazu, der Luftströmung der Rotorblattheizung innerhalb des Rotorblattes 200 z. B. durch temperaturabhängige Formänderung zu steuern oder zu beeinflussen.

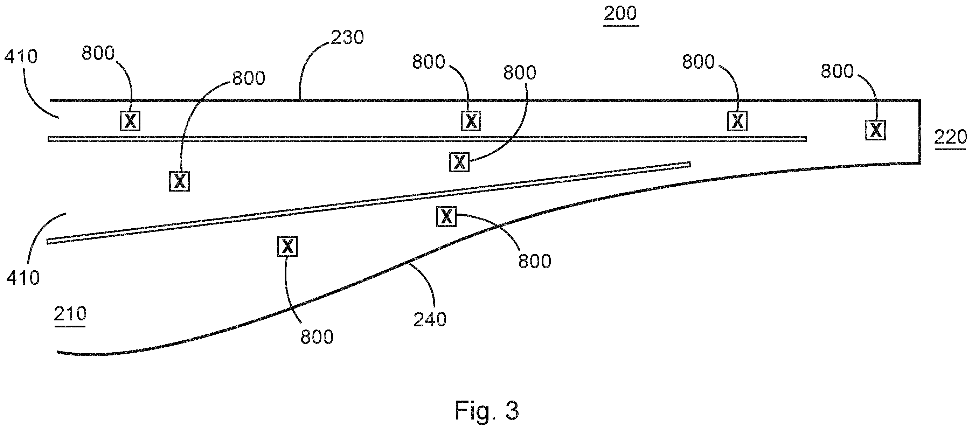

Fig. 3 zeigt eine schematische Darstellung eines Rotorblattes gemäß einem zweiten Ausführungsbeispiel. Das Rotorblatt 200 weist eine Rotorblattwurzel 210, eine Rotorblattspitze 220, eine Vorderkante 230 und eine Hinterkante 240 auf. Im Inneren des Rotorblattes ist mindestens ein Steg 410 vorgesehen, welcher sich von dem Bereich der Rotorblattwurzel 210 in den Bereich der Rotorblattspitze 220 erstreckt. Das Rotorblatt 200 weist mindestens ein passiv steuerbares Luftsteuerungselement 800 auf. Ein derartiges passiv steuerbares Luftsteuerungselement kann entlang der Länge der Stege 410 angeordnet sein.

Gemäß einem Aspekt der vorliegenden Erfindung kann das passiv steuerbare Luftsteuerungselement 800 an verschiedenen Stellen entlang der Länge L des Rotorblattes 200 und im Inneren des Rotorblattes 200 beispielsweise zwischen einem Steg 411 und der Rotorblattwandung 202 oder zwischen einem Steg 410 und einer Rotorblatthinterkante 230 vorgesehen sein.

Gemäß einem Aspekt der vorliegenden Erfindung dient das passiv steuerbares Luftsteuerungselement 800 dazu, eine Luftströmung innerhalb der Luftführung des Rotorblattes (lokal) z. B. durch temperaturabhängige Formänderung zu beeinflussen.

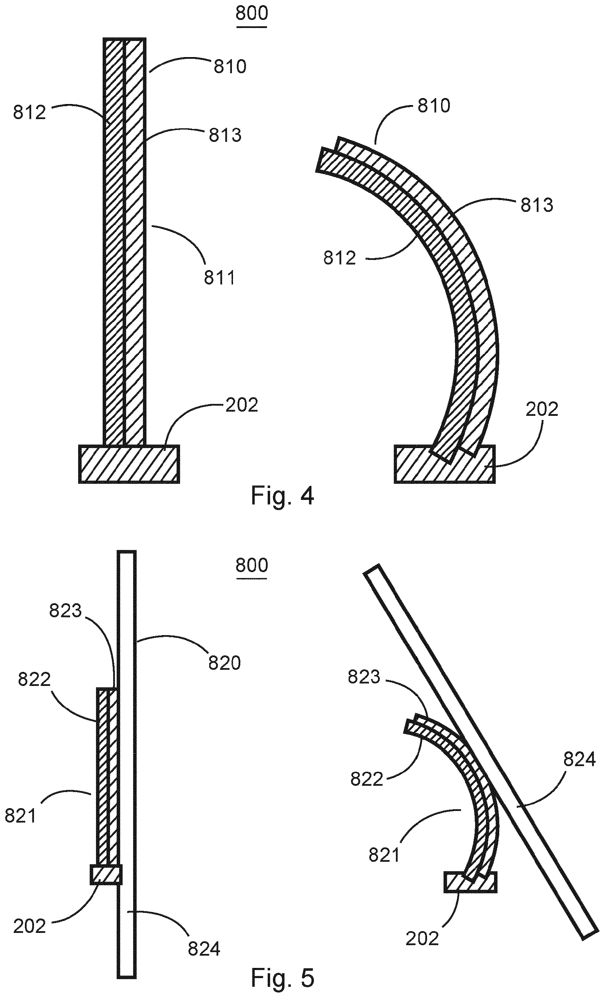

Fig. 4 zeigt eine schematische Darstellung eines passiv steuerbaren Luftsteuerungselementes. Das passiv steuerbare Luftsteuerungselement 800 kann als passiv gesteuerte Strömungsumlenkung 810 ausgestaltet sein. Die Strömungsumlenkung 810 weist ein Bimaterialelement 811 mit einem ersten Materialabschnitt und einem zweiten Materialabschnitt 812, 813 auf, wobei sich die Wärmeausdehnungskoeffizienten der beiden Materialabschnitte 812, 813 unterscheiden. Vorzugsweise weist die Strömungsumlenkung 810 ein Bimetallelement 811 mit einem ersten Metallabschnitt und einem zweiten Metallabschnitt 812, 813 auf, wobei sich die Wärmeausdehnungskoeffizienten der beiden Metallabschnitte 812, 813 unterscheiden. Dies hat zur Folge, dass bei einer Erwärmung der Strömungsumlenkung 810 einer der beiden Metallabschnitte sich größer ausdehnt als der andere und es damit zu einer Verbiegung der Strömungsumlenkung 810 kommt. Durch diese temperaturabhängige Formänderung kommt es zu einer unterschiedlichen Beeinflussung der Luftströmung in der Luftführung 400. Das Luftsteuerungselement 800 kann an einer Rotorblattwandung und/oder an einem Steg 410 befestigt sein und kann in das Innenvolumen 203 des Rotorblattes 200 hineinragen.

Fig. 5 zeigt eine schematische Darstellung eines passiv steuerbaren Luftsteuerungselementes. Das Luftsteuerungselement kann als passiv gesteuerter statischer Mischer 820 ausgestaltet sein. Dazu weist der Mischer 820 ein Bimaterialelement 821 mit einem ersten und zweiten Materialabschnitt 812, 813 auf, welche jeweils einen unterschiedlichen Wärmeausdehnungskoeffizienten aufweisen. Ferner ist ein Luftleitelement 824 vorgesehen, welches mit dem Bimaterialabschnitt 821 gekoppelt ist. Bei Erwärmung verbiegt sich das Bimaterialelement 821, so dass sich auch damit die Position des daran befestigten Luftleitelements 824 verändert. Insbesondere kann ein Winkel des Luftleitelements 824 wie beispielsweise in Fig. 5 dargestellt verändert werden. Durch diese temperaturabhängige Formänderung kommt es zu einer unterschiedlichen Beeinflussung der Luftströmung in der Luftführung 400. Das Luftsteuerungselement 800 kann an einer Rotorblattwandung und/oder an einem Steg 410 befestigt sein und kann in das Innenvolumen 203 des Rotorblattes 200 hineinragen.

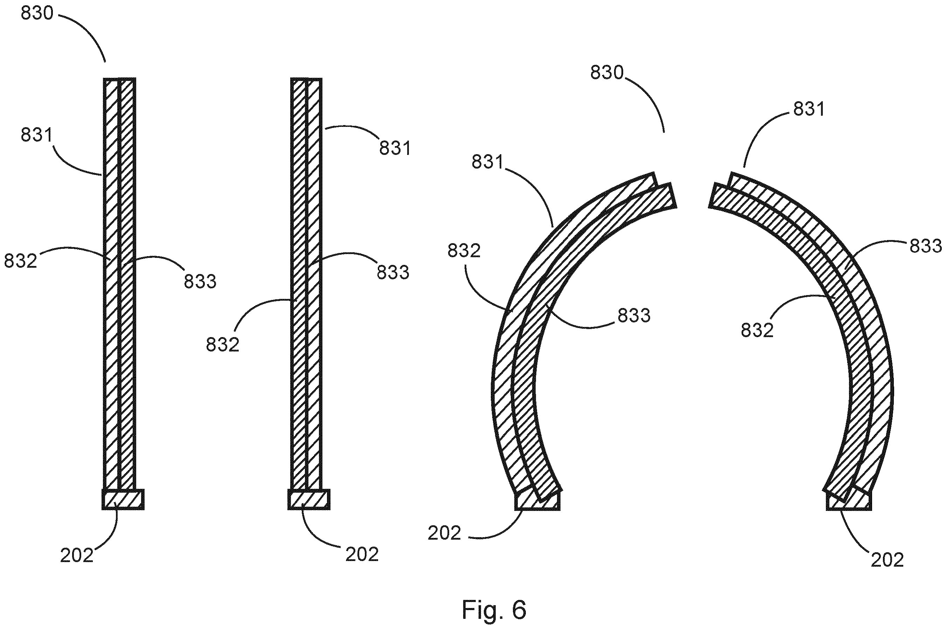

Fig. 6 zeigt eine schematische Darstellung eines passiv steuerbaren Luftsteuerungselementes. Das Luftsteuerungselement kann beispielsweise als ein passiv gesteuerter Wirbelgenerator 830 ausgestaltet sein. Der passiv gesteuerte Wirbelgenerator 830 weist ein Bimaterialelement 831 mit einem ersten und zweiten Materialabschnitt 832, 833 auf, welche unterschiedliche Wärmeausdehnungskoeffizienten aufweisen, so dass sich das Bimaterialelement 831 bei Erwärmung verbiegt. Der Bimaterialabschnitt kann als Bimetallabschnitt mit zwei unterschiedlichen Metallabschnitten mit unterschiedlichen Wärmeausdehnungskoeffizienten ausgestaltet sein. Damit kann erreicht werden, dass sich die Form des Wirbelgenerators 830 verändert. Insbesondere kann somit eine passive Steuerung der Form des Wirbelgenerators 830 beispielsweise in Abhängigkeit von einer Temperatur erreicht werden. Dies ist insbesondere vorteilhaft, weil damit keine aktiven Aktuatoren benötigt werden, um die Form der Wirbelgeneratoren zu ändern. Das Luftsteuerungselement 800 kann an einer Rotorblattwandung und/oder an einem Steg 410 befestigt sein und kann in das Innenvolumen 203 des Rotorblattes 200 hineinragen.

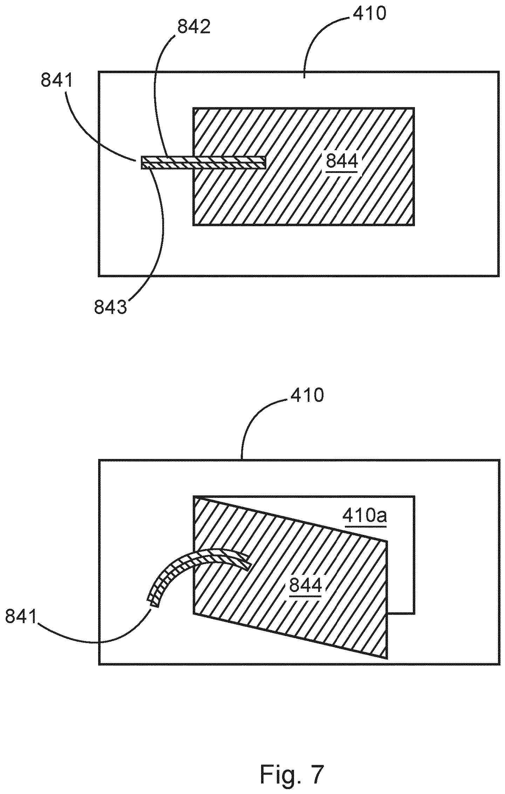

Fig. 7 zeigt eine schematische Darstellung eines passiv steuerbaren Luftsteuerungselementes. Das Luftsteuerungselement 800 kann beispielsweise als passiv gesteuerte Klappeneinheit 840 ausgestaltet sein. Die passiv gesteuerte Klappeneinheit 840 kann einen Bimaterialabschnitt 841 mit einem ersten und zweiten Materialabschnitt 842, 843 aufweisen. Der Bimaterialabschnitt 841 kann beispielsweise mit einer Klappe 844 gekoppelt sein, so dass die Klappe 844 aufgrund der Verformung des Bimaterialabschnittes 841 geöffnet oder geschlossen werden kann. Eine derartige Klappe 844 kann beispielsweise in oder an einem Steg 410 innerhalb des Rotorblattes vorgesehen sein. Durch das Öffnen und Schließen der Klappe 844 kann somit eine Öffnung 410a im Steg geöffnet oder geschlossen sein, so dass damit eine Luftströmung beeinflusst wird. Das Luftsteuerungselement 800 kann an einer Rotorblattwandung und/oder an einem Steg 410 befestigt sein und kann in das Innenvolumen 203 des Rotorblattes 200 hineinragen.

Gemäß einem Aspekt der vorliegenden Erfindung kann das passiv gesteuerte Luftsteuerungselemente eine signifikante Verbesserung auf die Luftströmung in der Luftführung für die Rotorblattheizung durch einen erhöhten Wärmeaustausch an der zu erwärmenden Oberfläche (Rotorblattwandung) aufweisen.

Gemäß einem Aspekt der vorliegenden Erfindung können bereits installierte Rotorblätter mit passiv gesteuerten Luftsteuerungselementen nachgerüstet werden, um die Effizienz der Rotorblatterwärmung zu steigern.

Die passiv gesteuerten Luftsteuerungselementen lassen sich insbesondere bei Rotorblättern einer Windenergieanlage anwenden, welche eine große Länge aufweisen und einen geringeren Innenquerschnitt aufweisen.

Gemäß einem Aspekt der vorliegenden Erfindung kann durch die Verwendung passiv gesteuerten Luftsteuerungselementen eine Temperatur der Luftströmung an der Rotorblattschale erheblich verbessert werden. Während im Stand der Technik die Temperatur der Luftströmung an der Schalung bereits auf 50 °C sinken kann, kann mit den erfindungsgemäßen aerodynamischen Mischern die Temperatur der Luftströmung an der Innenwandung erheblich gesteigert, insbesondere auf 70 - 80 °C gesteigert werden.

Gemäß der Erfindung kann somit ein verbesserter Wärmeübergang von der erwärmten Luft auf das Material der Schalung des Rotorblattes erreicht werden, ohne dass hierbei die Druckverluste erheblich gesteigert werden.

Gemäß der Erfindung kann somit ein thermischer Austauschkühler wandnaher Strömung mit warmer wandferner Strömung verbessert werden, ohne dass dabei höhere Druckverluste resultieren.

Mit den passiv steuerbaren Luftsteuerungselementen können die Elemente hier aktiviert (d. h. z. B. verformt) werden, wenn sie benötigt werden.

Das passiv steuerbare Luftsteuerungselement 800 kann mindestens eine erste und zweite Betriebsposition aufweisen. Wie in Fig. 4 gezeigt, kann eine erste Betriebsposition vorgesehen sein, bei welcher das Luftsteuerungselement gerade ausgestaltet ist. In einer zweiten Betriebsposition (rechts in der Fig. 4 dargestellt) kann das passive Luftsteuerungselement verformt sein. Zwischen der ersten und zweiten Betriebsposition, beispielsweise wie in Fig. 4 dargestellt, kann es zu einer Temperaturänderung gekommen sein.

Wie beispielsweise in Fig. 5 dargestellt, kann das passive Luftsteuerungselement eine erste Betriebsposition (links in Fig. 5) und eine zweite Betriebsposition (rechts in Fig. 5) aufweisen. In der ersten Betriebsposition kann das Luftsteuerungselement gerade ausgestaltet sein und in der zweiten Betriebsposition kann das Luftsteuerungselement verformt ausgestaltet sein.

In Fig. 6 kann das Luftsteuerungselement eine erste Betriebsposition (links) und eine zweite Betriebsposition (rechts) aufweisen. In der ersten Betriebsposition kann das Luftsteuerungselement gerade ausgestaltet sein und in der zweiten Betriebsposition kann das Luftsteuerungselement verformt ausgestaltet sein.

In Fig. 7 ist eine erste Betriebsposition (oben) und eine zweite Betriebsposition (unten) dargestellt. In der ersten Betriebsposition kann das Luftsteuerungselement gerade ausgestaltet sein und in der zweiten Betriebsposition kann das Luftsteuerungselement verformt ausgestaltet sein.

Die passiv gesteuerten Luftsteuerungselemente können in der Ausgangslage aktiv oder passiv sein. Eine Änderung kann durch Beeinflussung des Bimaterialabschnitts (d.h. temperaturabhängig) erfolgen. Wenn die Luftsteuerungselemente aktiv sind, dann können die Vortex Generatoren VG aktiv sein, der statische Mischer kann aktiv sein und die Klappe kann auf sein. Die passiv gesteuerten Luftsteuerungselemente können in ihrer Endlage inaktiv sein, d.h. die Vortex Generatoren VG sind inaktiv, die statischen Mischer sind inaktiv, und die Klappe kann zu. Alternativ dazu können die passiv gesteuerten Luftsteuerungselemente auch umgekehrt ausgestaltet sein, d.h. die Luftführungselemente sind in der Ausgangslage inaktiv und in der Endlage aktiv.

### Bezugszeichenliste

- 100: Windenergieanlage
- 102: Turm
- 104: Gondel
- 106: Rotor
- 110: Spinner
- 200: Rotorblätter
- 201: Länge
- 202: Rotorblattwandung
- 203: Innenvolumen
- 210: Rotorblattwurzel
- 220: Rotorblattspitze
- 230: Vorderkante
- 240: Hinterkante
- 250: Druckseite
- 260: Saugseite
- 300: Rotorblattheizung
- 310: Heizeinheit
- 320: Lüfter
- 400: Luftführung
- 402: Umlenkabschnitt
- 410: Steg
- 410a: Öffnung
- 411: Steg
- 412: Steg
- 800: passiv steuerbares Luftsteuerungselement
- 810: Strömungsumlenkelement
- 811: Bimaterialelement/Bimetallelement
- 812: erster Materialabschnitt/Metallabschnitt
- 813: zweiter Materialabschnitt/Metallabschnitt
- 820: passiv steuerbarer statischer Mischer
- 821: Bimaterialelement/Bimetallelement
- 822: erster Materialabschnitt/Metallabschnitt
- 823: zweiter Materialabschnitt/Metallabschnitt
- 824: Luftleitelement
- 830: passiv gesteuerter Wirbelgenerator
- 831: Bimaterialelement/Bimetallelement
- 832: erster Materialabschnitt/Metallabschnitt
- 833: zweiter Materialabschnitt/Metallabschnitt
- 840: passiv gesteuerte Klappeneinheit
- 841: Bimaterialelement/Bimetallelement
- 842: erster Materialabschnitt/Metallabschnitt
- 843: zweiter Materialabschnitt/Metallabschnitt
- 844: Klappe
- L: Längsrichtung

## Patentansprüche

1. Windenergieanlagen-Rotorblatt (200), mit
einer Länge (201)
einer Rotorblattwurzel (210),
einer Rotorblattspitze (220),
einer Druckseite (250),
einer Saugseite (260),
einer Rotorblattwandung (202),
einem Innenvolumen (203),
einer Luftführung (400) für erwärmte Luft zum Führen von erwärmter Luft innerhalb des Rotorblattes (200) und entlang einer Längsrichtung (L) des Rotorblattes (200) von der Rotorblattwurzel (210) in Richtung der Rotorblattspitze (220), und
mindestens einem passiv steuerbaren Luftsteuerungselement (800) zum Steuern oder Beeinflussen einer Luftströmung im Bereich der Luftführung (400) und in dem Innenvolumen (203),
**dadurch gekennzeichnet, dass**
das passiv steuerbare Luftsteuerungselement (800) einen temperaturabhängigen Abschnitt (810, 820, 830, 840) aufweist, der seine Form temperaturabhängig ändert.

2. Windenergieanlagen-Rotorblatt (200) nach Anspruch 1, wobei
die Luftführung (400) mindestens einen Steg (410) aufweist, welcher zwischen der Druckseite (250) und der Saugseite (260) angeordnet ist und sich entlang der Längsrichtung (L) des Rotorblattes (200) erstreckt,
wobei das mindestens eine passiv steuerbare Luftsteuerungselement (800) entlang des mindestens einen Steges (410) angeordnet ist.

3. Windenergieanlagen-Rotorblatt (200) nach Anspruch 1 oder 2, wobei
das passiv steuerbare Luftsteuerungselement (800) ein Bimaterialelement (811, 821, 831, 841) aufweist, welches einen ersten und zweiten Materialabschnitt (812, 813) mit unterschiedlichen Wärmeausdehnungskoeffizienten aufweist.

4. Windenergieanlagen-Rotorblatt (200) nach einem der Ansprüche 1 bis 3, wobei
das passiv steuerbare Luftsteuerungselement (800) als Strömungsumlenkelement (810) mit einem Bimetallelement (811) mit einem ersten und zweiten Bimetallabschnitt (812, 813) ausgestaltet ist.

5. Windenergieanlagen-Rotorblatt (200) nach einem der Ansprüche 1 bis 4, wobei
das passiv steuerbare Luftsteuerungselement (800) als ein passiv steuerbarer statischer Mischer (820) mit einem Bimaterialelement (821) ausgestaltet ist, dessen Form temperaturabhängig ist.

6. Windenergieanlagen-Rotorblatt (200) nach einem der Ansprüche 1 bis 5, wobei
das passiv steuerbare Luftsteuerungselement (800) mindestens einen passiv gesteuerten Wirbelgenerator (830) aufweist,
wobei der passiv gesteuerte Wirbelgenerator (830) ein Bimaterialelement (831) mit einem ersten und zweiten Bimaterialabschnitt (832, 833) aufweist, deren Wärmeausdehnungskoeffizienten unterschiedlich sind.

7. Windenergieanlagen-Rotorblatt (200) nach einem der Ansprüche 1 bis 6, wobei
das passiv steuerbare Luftsteuerungselement (800) mindestens eine erste und zweite Betriebsposition aufweist,
wobei in der ersten Betriebsposition das passiv steuerbare Luftsteuerungselement (800) aktiv die Luftsteuerung beeinflusst und in der zweiten Betriebsposition keine Beeinflussung der Luftströmung erfolgt.

8. Windenergieanlagen-Rotorblatt (200) nach einem der Ansprüche 1 bis 7, wobei
das passiv steuerbare Luftsteuerungselement (800) mindestens eine erste und zweite Betriebsposition aufweist,
wobei in der ersten Betriebsposition das Steuerungselement die Luftströmung nicht beeinflusst und in der zweiten Betriebsposition das Luftsteuerungselement aktiv die Luftströmung beeinflusst.

9. Windenergieanlagen-Rotorblatt (200) nach einem der Ansprüche 1 bis 8, wobei
das mindestens eine passiv steuerbare Luftsteuerungselement (800) entlang einer Innenwandung des Rotorblattes angeordnet ist.

10. Windenergieanlage mit mindestens einem Windenergieanlagen-Rotorblatt (200) nach einem der Ansprüche 1 bis 9.

## Claims

1. A wind turbine rotor blade (200), with
a length (201),
a rotor blade root (210),
a rotor blade tip (220),
a pressure side (250),
a suction side (260),
a rotor blade wall (202),
an inner volume (203),
an air guide (400) for heated air to guide heated air inside of the rotor blade (200) and along a longitudinal direction (L) of the rotor blade (200) from the rotor blade root (210) in the direction of the rotor blade tip (220), and
at least one passively controllable air control element (800) to control or influence an air flow in the area of the air guide (400) and in the inner volume (203), **characterized in that**
the passively controllable air control element (800) has a temperature-dependent section (810, 820, 830, 840), which changes its shape depending on the temperature.

2. The wind turbine rotor blade (200) according to claim 1, wherein
the air guide (400) has at least one web (410), which is arranged between the pressure side (250) and the suction side (260), and extends along the longitudinal direction (L) of the rotor blade (200),
wherein the at least one passively controllable air control element (800) is arranged along the at least one web (410).

3. The wind turbine rotor blade (200) according to claim 1 or 2, wherein
the passively controllable air control element (800) has a bimaterial element (811, 821, 831, 841), which has a first and second material section (812, 813) with different heat expansion coefficients.

4. The wind turbine rotor blade (200) according to one of claims 1 to 3, wherein
the passively controllable air control element (800) is designed as a flow deflection element (810) with a bimetal element (811) with a first and second bimetal section (812, 813).

5. The wind turbine rotor blade (200) according to one of claims 1 to 4, wherein
the passively controllable air control element (800) is designed as a passively controllable static mixer (820) with a bimaterial element (821), the shape of which depends on temperature.

6. The wind turbine rotor blade (200) according to one of claims 1 to 5, wherein
the passively controllable air control element (800) has at least one passively controlled swirl generator (830),
wherein the passively controlled swirl generator (830) has a bimaterial element (831) with a first and second bimaterial section (832, 833), the heat expansion coefficients of which differ.

7. The wind turbine rotor blade (200) according to one of claims 1 to 6, wherein
the passively controllable air control element (800) has at least a first and second operating position,
wherein the passively controllable air control element (800) actively influences the air controller in the first operating position, and the air flow is not influenced in the second operating position.

8. The wind turbine rotor blade (200) according to one of claims 1 to 7, wherein
the passively controllable air control element (800) has at least a first and second operating position,
wherein the control element does not influence the air flow in the first operating position, and the air control element actively influences the air flow in the second operating position.

9. The wind turbine rotor blade (200) according to one of claims 1 to 8, wherein
the at least one passively controllable air control element (800) is arranged along an inner wall of the rotor blade.

10. A wind turbine with at least one wind turbine rotor blade (200) according to one of claims 1 to 9.

## Revendications

1. Pale de rotor d'éolienne (200), avec
une longueur (201)
une racine de pale de rotor (210),
une pointe de pale de rotor (220),
un côté de pression (250),
un côté d'aspiration (260),
une paroi de pale de rotor (202),
un volume intérieur (203),
un conduit d'air (400) pour de l'air chauffé destiné à guider de l'air chauffé à l'intérieur de la pale de rotor (200) et le long d'une direction longitudinale (L) de la pale de rotor (200) depuis la racine de pale de rotor (210) en direction de la pointe de pale de rotor (220), et
au moins un élément de commande d'air (800) pouvant être piloté avec une commande passive destiné à commander ou influencer un écoulement d'air dans la zone du conduit d'air (400) et dans le volume intérieur (203),
**caractérisée en ce que**
l'élément de commande d'air (800) pouvant être piloté avec une commande passive présente un tronçon dépendant de la température (810, 820, 830, 840), qui change de forme en fonction de la température.

2. Pale de rotor d'éolienne (200) selon la revendication 1, dans laquelle
le conduit d'air (400) présente au moins une nervure (410), qui est disposée entre le côté de pression (250) et le côté d'aspiration (260) et qui s'étend le long de la direction longitudinale (L) de la pale de rotor (200),
dans laquelle l'au moins un élément de commande d'air (800) pouvant être piloté avec une commande passive est disposé le long de l'au moins une nervure (410).

3. Pale de rotor d'éolienne (200) selon la revendication 1 ou 2, dans laquelle
l'élément de commande d'air (800) pouvant être piloté avec une commande passive présente un élément bimatériau (811, 821, 831, 841), qui présente un premier et un second tronçon de matériau (812, 813) avec des coefficients de dilatation thermique différents.

4. Pale de rotor d'éolienne (200) selon l'une quelconque des revendications 1 à 3, dans laquelle
l'élément de commande d'air (800) pouvant être piloté avec une commande passive est configuré en tant qu'élément de renvoi d'écoulement (810) avec un élément bimétallique (811) avec un premier et un second tronçon bimétallique (812, 813).

5. Pale de rotor d'éolienne (200) selon l'une quelconque des revendications 1 à 4, dans laquelle
l'élément de commande d'air (800) pouvant être piloté avec une commande passive est configuré en tant que mélangeur statique (820) pouvant être piloté avec une commande passive avec un élément bimatériau (821) dont la forme dépend de la température.

6. Pale de rotor d'éolienne (200) selon l'une quelconque des revendications 1 à 5, dans laquelle
l'élément de commande d'air (800) pouvant être piloté avec une commande passive présente au moins un générateur de turbulences (830) à commande passive,
dans laquelle le générateur de turbulences (830) à commande passive présente un élément bimatériau (831) avec un premier et un second tronçon bimatériau (832, 833) dont les coefficients de dilatation thermique sont différents.

7. Pale de rotor d'éolienne (200) selon l'une quelconque des revendications 1 à 6, dans laquelle
l'élément de commande d'air (800) pouvant être piloté avec une commande passive présente au moins une première et une deuxième position de fonctionnement,
dans laquelle, dans la première position de fonctionnement, l'élément de commande d'air (800) pouvant être piloté avec une commande passive influence activement la commande d'air et, dans la deuxième position de fonctionnement, aucune influence de l'écoulement d'air n'a lieu.

8. Pale de rotor d'éolienne (200) selon l'une quelconque des revendications 1 à 7, dans laquelle
l'élément de commande d'air (800) pouvant être piloté avec une commande passive présente au moins une première et une deuxième position de fonctionnement,
dans laquelle, dans la première position de fonctionnement, l'élément de commande n'influence pas l'écoulement d'air et, dans la deuxième position de fonctionnement, l'élément de commande d'air influence activement l'écoulement d'air.

9. Pale de rotor d'éolienne (200) selon l'une quelconque des revendications 1 à 8, dans laquelle
l'au moins un élément de commande d'air (800) pouvant être piloté avec une commande passive est disposé le long d'une paroi intérieure de la pale de rotor.

10. Éolienne avec au moins une pale de rotor d'éolienne (200) selon l'une quelconque des revendications 1 à 9.
